# EUROPÄISCHE PATENTSCHRIFT

(11) **EP 1 305 531 B1**
(45) Veröffentlichungstag und Bekanntmachung des Hinweises auf die Patenterteilung: **07.12.2005**
(21) Anmeldenummer: 01949266.9
(22) Anmeldetag: 13.06.2001
(51) Int. Cl.: F16C 11/06

(54) **LAGERSCHALE FÜR KUGELGELENKE ODER KUGELHÜLSENGELENKE**
BEARING SHELL FOR BALL-AND-SOCKET JOINTS OR SPHERICAL BUSHING JOINTS
COUSSINET POUR ARTICULATIONS A ROTULE OU ARTICULATION

(30) Priorität: 16.06.2000 DE 10028984
(43) Veröffentlichungstag der Anmeldung: 02.05.2003
(73) Patentinhaber: ZF Lemförder Metallwaren AG, 49441 Lemförde (DE)
(72) Erfinder: BOHNE, Manfred, 49448 Quernheim (DE); KLUMPE, Stefan, 49179 Ostercappeln (DE); STUNTEBECK, Dirk, 49439 Steinfeld (DE)
(86) Internationale Anmeldenummer: PCT/DE2001/002244
(87) Internationale Veröffentlichungsnummer: WO 2001/096754

(56) Entgegenhaltungen:
- WO-A-99/32796
- GB-A- 2 052 620
- GB-A- 2 181 496
- US-A- 2 527 787
- US-A- 3 744 859
- US-A- 4 435 101
- US-A- 4 619 658

## Beschreibung

Die Erfindung betrifft eine Lagerschale für Kugelgelenke oder Kugelhülsengelenke mit einer inneren, hohlkugelförmig ausgebildeten Lagerfläche und einer äußeren, zylinderförmig ausgebildeten Aufnahmefläche, mit welcher die Lagerschale in ein Gelenkgehäuse einsetzbar ist.

Lagerschalen dieser Art sind in unterschiedlichsten Varianten in Kugelgelenken und Kugelhülsengelenken eingesetzt. Derartige Gelenke besitzen üblicherweise einen Kugelschaft, der bei Kugelgelenken an einem Ende und bei Kugelhülsengelenken mittig einen Kugelabschnitt aufweist, welcher in der hohlkugelförmigen Lagerfläche der Lagerschale aufgenommen ist, so dass der Kugelschaft gegenüber der Mittellängsachse des Gelenkes Schwenk- und Drehbewegungen ausführen kann. Die Lagerschalen wiederum sind üblicherweise in zylinderförmigen Bohrungen eines Gelenkgehäuses verdrehfest aufgenommen. Die Fertigung der gattungsgemäßen Lagerschalen, die üblicherweise aus Kunststoff, insbesondere POM, hergestellt sind, erfolgt in Spritzgusstechnik, wobei die Form des Spritzgusswerkzeuges zweiteilig ausgebildet ist, mit einem innen liegenden, kugelförmigen Kern und einem außen liegenden, der äußeren Form der Lagerschale angepassten Hohlform. Das innen liegende kugelförmige Formteil wird nach dem Spritzgießvorgang von der fertigen Kugelschale durch Zwangsentformung getrennt, wobei die herkömmlichen Lagerschalen relativ großen Verformungen ausgesetzt sind. Zur Realisierung dieser Verformungen besitzen die Lagerschalen deshalb mehrere, in Richtung der Mittellängsachse axial verlaufende Schlitze, die etwa bis zur Äquatorialebene der hohlkugelförmig ausgebildeten Lagerinnenfläche reichen. Diese Schlitze erleichtern die Zwangsentformung der Lagerschale, trotzdem ist die Materialauswahl einer zwangsentformbaren Lagerschale infolge der erforderlichen hohen Dehnung und des geringen E-Moduls eingeschränkt. Die Beschränkung der Materialauswahl hat wiederum negative Auswirkungen auf die Belastbarkeit der Lagerschale und somit des gesamten Kugelgelenkes oder Kugelhülsengelenkes bei hohen Temperaturen und hohen Belastungen, da in Extremsituationen das Lagerschalenmaterial zum Fließen neigt, wobei insbesondere im Bereich der Schlitze die Möglichkeit einer Wanderung des Schalenmaterials besteht. Daraus resultiert u. U. eine Veränderung der Geometrie der hohlkugelförmigen Lagerfläche mit daraus sich ergebendem erhöhten Verschleiß bis hin zu einem Gesamtausfall des betreffenden Kugelgelenkes oder Kugelhülsengelenkes.

Aus der US 4,619,658 ist eine gattungsgemäße Lagerschale für Kugelgelenke oder Kugelhülsengelenke mit einer inneren, hohlkugelförmig ausgebildeten Lagerfläche und einer äußeren, zylinderförmig ausgebildeten Aufnahmefläche, mit der die Lagerschale in ein Gelenkgehäuse einsetzbar ist, bekannt. Diese Lagerschale ist für den Einsatz in einem künstlichen Hüftgelenk vorgesehen. Die bekannte Lagerschale ist mehrteilig mit zwei Schalenteilen ausgebildet, wobei die Schalenteile miteinander lösbar koppelbar sind und die Trennebene zwischen den Halbschalen in Richtung der Mittellängsachse der Lagerschale verläuft. Zur Halterung der beiden Schalenteile aneinander wird allerdings zusätzlich ein Spannmittel benötigt; dessen Montage aufwendig ist und das zudem an der Außenoberfläche der Lagerschale eine Nut erfordert, in die das Spannmittel eingelegt werden kann.

Aufgabe der vorliegenden Erfindung ist es daher, eine Lagerschale der gattungsgemäßen Art bereitzustellen, welche einfach montierbar ist und aufgrund erweiterter Materialauswahlmöglichkeiten eine erhöhte Belastbarkeit und Lebensdauer besitzt, wobei die herkömmliche Herstellung in Spritzgustechnik weiterhin Verwendung finden soll.

Diese Aufgabe wird erfindungsgemäß in Zusammenschau mit den gattungsbildenden Merkmalen durch die technische Lehre des Anspruches 1 gelöst.

Durch die erfindungsgemäße Maßnahme lässt sich die aus mehreren, vorzugsweise zwei Halbschalen bestehende Lagerschale bei der Montage des Kugelgelenkes oder Kugelhülsengelenkes einfach mittels einer Rastverbindung zusammensetzen. Die Herstellung der Halbschalen kann in herkömmlicher Weise in Spritzgießtechnik erfolgen, wobei jedoch bei der Entformung der Halbschalen das Schalenmaterial keine besonderen elastischen Eigenschaften aufweisen muss. Aus diesem Grunde lassen sich gegenüber dem Stand der Technik auch härtere und somit verschleißfestere Kunststoffe für Lagerschalen einsetzen. Darüber hinaus ist die Belastungsgrenze der Lagerschalen aufgrund der durch die infolge der nicht mehr notwendigen Zwangsentformung fehlenden Schlitze entsprechend gesteigert.

Besondere Ausgestaltungen des erfindungsgemäßen Gegenstandes ergeben sich in Zusammenschau mit der technischen Lehre des Hauptanspruches aus den Merkmalen der Unteransprüche.

Es hat sich insbesondere als vorteilhaft erwiesen, die Klemmvorrichtung so auszubilden, dass sie aus mindestens einem über die jeweilige Trennfläche der Schalenteile vorstehenden Stift und mindestens einer korrespondierenden, in dem jeweils angrenzenden Schalenteil angeordneten, Ausnehmung besteht. Stift und Ausnehmung lassen sich in ihrer Dimensionierung so aufeinander abstimmen, dass problemlos vordefinierte Klemmkräfte bzw. Reibkräfte beim Zusammenbau der Schalenteile realisiert werden können.

Entsprechend einer weiteren vorteilhaften Ausführungsform des Erfindungsgegenstandes ist die zylinderförmig ausgebildete Aufnahmefläche an der Außenseite der Lagerschale mit mehrere, in Umfangsrichtung angeordneten Ausnehmungen versehen. Diese Ausnehmungen fuhren zu einer nicht unerheblichen Gewichtsersparnis der Lagerschale.

Darüber hinaus kann es vorteilhaft sein, die innere hohlkugelformige Lagerfläche mit mindestens zwei, in Richtung der Mittellängsachse verlaufenden, Nuten zur Aufnahme von Schmiermittel zu versehen. Die als Schmiermittelreservoire vorgesehenen Nuten tragen zusätzlich zu der entsprechenden Materialauswahl dazu bei, die Belastungsmöglichkeiten und Standzeiten der Kugelgelenke bzw. Kugelhülsengelenke zu erhöhen.

Es hat sich darüber hinaus als zweckmäßig erwiesen, die Dicke der Lagerschale im Bereich der hohlkugelförmigen Lagerfläche konstant auszubilden, was zusätzlich zu einem gleichmäßigen Belastungszustand der Lagerschale beiträgt.

Im Folgenden wird ein Ausführungsbeipiel des Gegenstandes der Erfindung anhand der beigefügten Zeichnungen näher erläutert. Es zeigt:
- Figur 1:: eine räumliche Darstellung einer Hälfte einer Lagerschale,
- Figur 2:: eine Schnittdarstellung durch eine Halbschale,
- Figur 2a: eine Schnittdarstellung durch eine weitere Ausführungsform einer Halbschale und
- Figur 3:: eine räumliche Ansicht einer erfindungsgemäßen Ausführungsform einer Lagerschale für ein Kugelhülsengelenk.

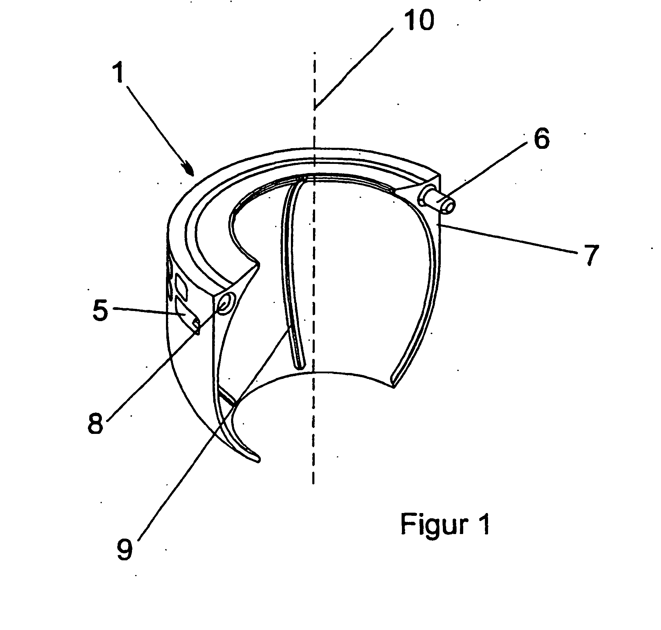

Die Lagerschale besteht im Wesentlichen aus zwei Halbschalen 1 und 2, von denen in dem dargestellten Ausführungsbeispiel eine Halbschale 1 abgebildet ist. In zusammengesetztem Zustand bilden die beiden Halbschalen eine innere, hohlkugelformige Lagerfläche 3 aus, während sie an ihrer Außenseite eine zylinderförmige Aufnahmefläche 4 besitzen, die in ein Gehäuse eines Kugelgelenkes einsetzbar ist. Die beiden Halbschalen 1 und 2 werden durch eine Klemmverbindung in zusammengesetztem Zustand miteinander gekoppelt. Die Klemmverbindung besteht im abgebildeten Ausführungsbeispiel aus einem Stift 6, der über die Trennfläche 7 zwischen den beiden Halbschalen 1 und 2 hervorsteht, und aus einer korrespondierenden Ausnehmung 8, die in der Trennfläche der Halbschale 2 eingebracht worden ist. Jeweils an einer Halbschale 1 bzw. 2 befindet sich ein Stift 6 sowie eine Ausnehmung 8. Der Durchmesser des Stiftes 6 und der Ausnehmung 8 sind so aufeinander abgestimmt, dass eine ausreichende Klemmwirkung durch Reibschluss im zusammengebauten Zustand erreicht wird. An der Aufnahmefläche 4 sind mehrere Ausnehmungen 5 angeordnet, die zu einer Gewichtsreduzierung der erfindungsgemäßen Lagerschale beitragen. Darüber hinaus ist der Figur 1 zu entnehmen, dass die halbkugelförmige Lagerfläche 3 mehrere Nuten 9 aufweist, die eine Tiefe von 0,1 bis 0,3 mm aufweisen und zur Aufnahme von Schmiermitteln, insbesondere Lagerfetten, vorgesehen sind.

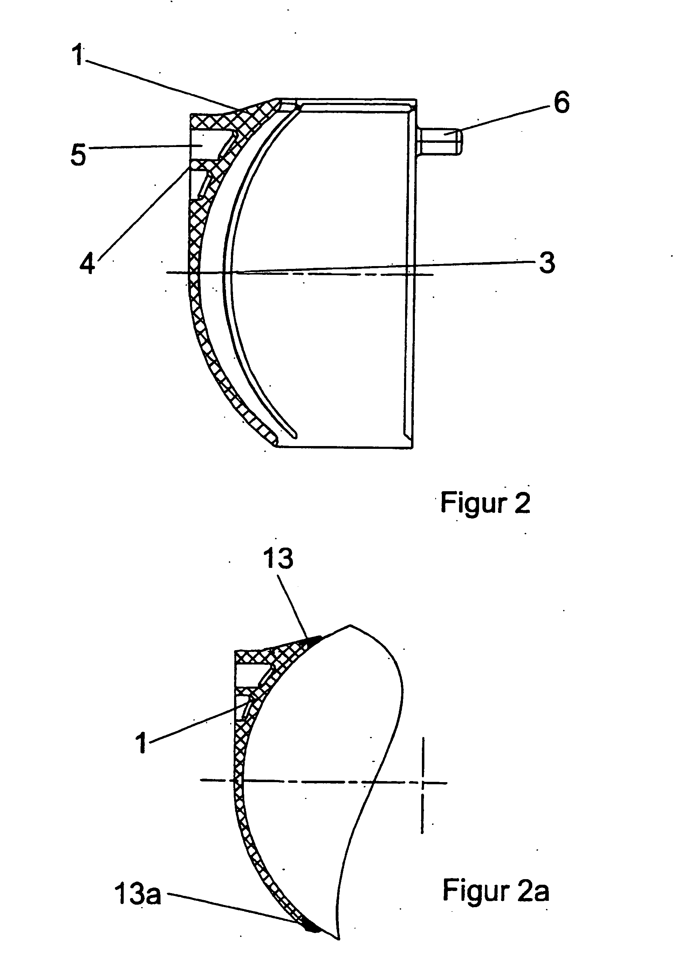

Aus der Schnittdarstellung der Figur 2 wird insbesondere deutlich, dass die Dicke der Lagerschale im Bereich der hohlkugelförmigen Lagerfläche 3 einen konstanten Wert aufweist, so dass eine gleichmäßige Belastung der Lagerschale gewährleistet ist.

Das Ausführungsbeispiel der Figur 2a besitzt zusätzlich Elastomerdichtungen 13 und 13a, die an der in der Lagerschale 1 aufgenommenen Kugel anliegen, wobei zu beachten ist, dass bei Kugelgelenken aufgrund ihres einseitig geschlossenen Gehäuses nur die Dichtung 13a notwendig ist.

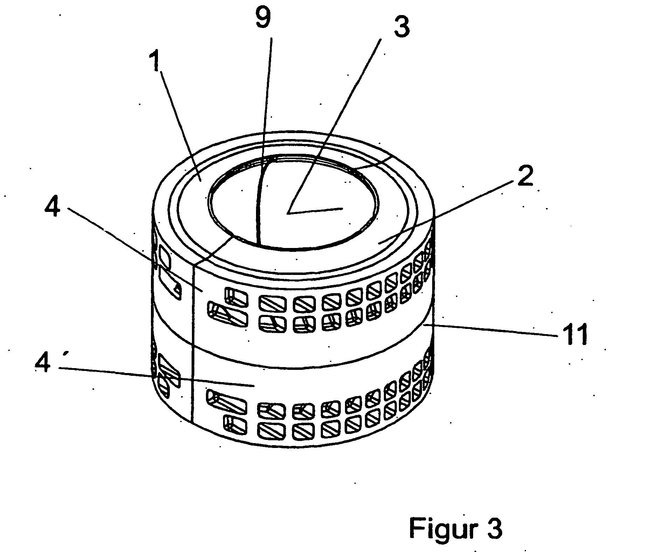

In der Figur 3 ist eine Ausführung der Erfindung dargestellt, die im Gegensatz zu der für Kugelgelenke vorgesehenen Variante der Figur 1 für Kugelhülsengelenke vorgesehen ist. Diese Ausführungsvariante unterscheidet sich durch einen zur Äquatorialebene 11 symmetrischen Aufbau der Halbschalen 1 und 2, die zylinderförmige Aufnahmefläche 4 umfasst bei dieser Ausführungsform den gesamten Außenbereich der Halbschalen 1 und 2. Durch die symmetrische Gestaltung ergeben sich Verrastungen der Halbschalen 1 und 2 sowohl im oberen Bereich als auch im unteren Bereich der Halbschalen. Analog dem Ausführungsbeispiel der Figur 1 weist die Lagerfläche 3 des Ausführungsbeispiels der Figur 3 ebenfalls Nuten 9 zur Aufnahme von Schmiermittel auf. Diese Nuten 9 verlaufen ebenso wie diejenigen der Figur 1 parallel zur Mittellängsachse 10.

Natürlich ist es denkbar, die erfindungsgemäße Lagerschale nicht nur zweiteilig sondern mehrteilig auszuführen, wobei die erfindungswesentlichen Merkmale und Vorteile erhalten bleiben. Der zwei- und mehrteilige Aufbau erleichtert insbesondere den Zusammenbau eines zugehörigen Kugelgelenkes oder Kugelhülsengelenkes sowie Herstellung bzw. Entformung der entsprechenden Schalenteile. Durch die spezielle bauliche Gestaltung lassen sich gegenüber dem Stand der Technik nunmehr auch Kunststoffmaterialien einsetzen, die aufgrund ihrer Härte bzw. ihrer mangelnden Elastizität bislang für den Einsatz in Kugelgelenken bzw. Kugelhülsengelenken nicht vorgesehen werden konnten.

### Bezugszeichenliste

- 1: Halbschale
- 2: Halbschale
- 3: Lagerfläche
- 4: Aufnahmefläche
- 5: Ausnehmung
- 6: Stift
- 7: Trennfläche
- 8: Ausnehmung
- 9: Nut
- 10: Mittellängsachse
- 11: Äquatorialebene
- 13: Elastomerdichtung
- 13a: Elastomerdichtung

## Patentansprüche

1. Lagerschale für Kugelgelenke oder Kugelhülsengelenke mit einer inneren hohlkugelförmig ausgebildeten Lagerfläche (3) und einer äußeren, zylinderförmig ausgebildeten Aufnahmefläche (4), mit der die Lagerschale in ein Gelenkgehäuse einsetzbar ist, wobei die Lagerschale mehrteilig mit mindestens zwei Schalenteilen (1, 2) ausgebildet ist, welche durch eine Klemmvorrichtung (6, 8) miteinander lösbar koppelbar sind und die Trennebene zwischen den Halbschalen (1,2) in Richtung der Mittellängsachse (10) der Lagerschale verläuft
**dadurch gekennzeichnet, dass**
die Klemmvorrichtung (6, 8) aus einer Rastverbindung besteht.

2. Lagerschale nach Anspruch 1,
**dadurch gekennzeichnet dass**
die Klemmvorrichtung aus mindestens einem über die jeweilige Trennfläche (7) der Halbschalen (1, 2) vorstehenden Stift (6) und mindestens einer korrespondierenden in der jeweils anderen Halbschale angeordneten Ausnehmung (8) besteht.

3. Lagerschale nach Anspruch 1 oder 2,
**dadurch gekennzeichnet, dass**
die zylinderförmig ausgebildete Aufnahmefläche (4) mehrere, in Umfangsrichtung angeordnete Ausnehmungen (5) aufweist.

4. Lagerschale nach einem der Ansprüche 1 bis 3,
**dadurch gekennzeichnet, dass**
die innere Lagerfläche (3) mindestens zwei in Richtung der Mittellängsachse (10) verlaufenden Nuten (9) zur Aufnahme von Schmiermitteln aufweist.

5. Lagerschale nach einem der Ansprüche 1 bis 4,
**dadurch gekennzeichnet, dass**
die Dicke der Lagerschale im Bereich der hohlkugelförmigen Lagerfläche (3) einen konstanten Wert aufweist.

## Claims

1. Bearing shell for ball joints or ball sleeve joints having an inner, hollow sphere-shaped bearing surface (3) and an outer, cylindrical locating surface (4), by which the bearing shell is insertable into a joint housing, wherein the bearing shell is of a multi-part design comprising at least two shell parts (1, 2), which are detachably connectable to one another by a clamping device (6, 8) and the parting plane between the half-shells (1, 2) extends in the direction of the longitudinal centre line (10) of the bearing shell,
**characterized in that**
the clamping device (6, 8) comprises a detent connection.

2. Bearing shell according to claim 1,
**characterized in that**
the clamping device comprises a least one pin (6), which projects from the respective parting plane (7) of the half-shells (1, 2), and at least one corresponding recess (8) disposed in the, in each case, other half-shell.

3. Bearing shell according to claim 1 or 2,
**characterized in that**
the cylindrical locating surface (4) has a plurality of recesses (5) disposed in peripheral direction.

4. Bearing shell according to one of claims 1 to 3,
**characterized in that**
the inner bearing surface (3) has at least two grooves (9) extending in the direction of the longitudinal centre line (10) for receiving lubricants.

5. Bearing shell according to one of claims 1 to 4,
**characterized in that**
the thickness of the bearing shell in the region of the hollow sphere-shaped bearing surface (3) has a constant value.

## Revendications

1. Coquille de coussinet pour articulations à rotule ou articulations sphériques avec une surface d'appui intérieure en forme de sphère creuse (3) et une surface de positionnement extérieure en forme de cylindre (4) avec laquelle le coussinet peut être logé dans un boîtier articulé, le coussinet étant conçu en plusieurs parties avec au moins deux parties de coquille (1, 2) qui peuvent être couplées l'une avec l'autre de manière détachable à l'aide d'un dispositif de serrage (6, 8) et le plan de séparation entre les demi-coquilles (1, 2) s'étendant dans la direction de l'axe médian longitudinal (10) de la coquille de coussinet,
**caractérisé en ce que**
le dispositif de serrage (6, 8) est constitué d'un raccord à crans.

2. Coquille de coussinet selon la revendication 1,
**caractérisé en ce que**
le dispositif de serrage est constitué d'au moins une goupille (6) faisant saillie au-dessus de la surface de séparation (7) respective des demi-coquilles (1, 2) et d'au moins un évidement (8) correspondant placé dans l'autre demi-coquille.

3. Coquille de coussinet selon la revendication 1 ou 2,
**caractérisé en ce que**
la surface de positionnement en forme de cylindre (4) comprend plusieurs évidements (5) disposés dans la direction circonférentielle.

4. Coquille de coussinet selon l'une quelconque des revendications 1 à 3,
**caractérisé en ce que**
la surface d'appui intérieure (3) comprend au moins deux rainures (9) s'étendant dans la direction de l'axe médian longitudinal (10) pour la réception de lubrifiants.

5. Coquille de coussinet selon l'une quelconque des revendications 1 à 4,
**caractérisé en ce que**
l'épaisseur de la coquille de coussinet présente une valeur constante dans la zone de la surface d'appui en forme de sphère creuse (3).
